# FASCICULE DE BREVET EUROPEEN

(11) **EP 3 017 000 B1**
(45) Date de publication et mention de la délivrance du brevet: **29.05.2024**
(21) Numéro de dépôt: 14745186.8
(22) Date de dépôt: 27.06.2014
(51) Int. Cl.: C08K 5/05, C08K 5/06, C08K 5/07, C08K 5/09, C08K 5/10, C09K 3/00, C08L 81/04

(54) **POLYSULFURES PHÉNOLIQUES À ODEUR AMÉLIORÉE**
PHENOLISCHE POLYSULFIDE MIT VERBESSERTEM GERUCH
PHENOLIC POLYSULPHIDES HAVING AN IMPROVED ODOUR

(30) Priorité: 01.07.2013 FR 1356367
(43) Date de publication de la demande: 11.05.2016
(73) Titulaire: Arkema France, 92700 Colombes (FR)
(72) Inventeur: SAINT-LOUIS-AUGUSTIN, Pascal, F-64140 Billere (FR)
(74) Mandataire: Arkema Patent
(86) Numéro de dépôt international: PCT/FR2014/051649
(87) Numéro de publication internationale: WO 2015/001234

(56) Documents cités:
- WO-A1-98/50011
- WO-A1-2006/005874
- US-A- 2 621 172
- US-A- 3 968 062
- US-A- 5 559 271
- US-A1- 2007 093 613
- US-A1- 2011 213 120

## Description

La présente invention concerne le domaine des oligomères et polymères de sulfures de phénols et plus particulièrement celui des polysulfures d'alkylphénols, rassemblés sous la dénomination commune de polysulfures phénoliques ou encore poly(sulfures de phénol), dont l'odeur caractéristique est masquée.

Les poly(sulfures de phénol) sont des composés bien connus et largement utilisés dans de nombreux domaines de l'industrie et notamment en tant qu'additifs pour divers types de résines et autres matériaux polymères, et par exemple en tant qu'agents de couplage, accélérateurs de vulcanisation pour les caoutchoucs, agents ignifugeants, conservateurs, pour ne citer que les principales utilisations.

Ils sont par exemple utilisés comme agents de vulcanisation pour des caoutchoucs de type EPDM, comme décrit par exemple dans le brevet EP1675989 ou dans la demande WO2008074962 où ils sont incorporés à des mélanges-maîtres, comme agents de couplage pour des compositions élastomères comportant une charge renforçante, comme décrit par exemple dans le brevet EP1633813, comme accélérateurs de vulcanisation de caoutchoucs butyle, comme décrit par exemple dans la demande US2008/0287623, ou encore comme agents de protection, notamment pour le bois, comme décrit par exemple dans le brevet EP0944460, pour ne citer que quelques références et utilisations de ces poly(sulfures de phénol).

Ces poly(sulfures de phénol) se présentent le plus souvent sous la forme de liquides visqueux, de poudres, de granulés ou bien formulés dans des matrices polymériques, par exemple dans des mélanges-maîtres de résines thermoplastiques (cf. WO2008074962 discuté ci-dessus), et certains de leurs représentants sont par exemple connus sous le nom générique de Vultac^{®} commercialisés par la Société Arkema.

Parmi les méthodes de synthèse de poly(sulfures de phénol) qui se révèlent les plus rentables et plus utilisées industriellement, on peut citer les procédés consistant à faire réagir un phénol ou un alkylphénol avec :
- du monochlorure de soufre (S₂Cl₂) ou du dichlorure de soufre (SCl₂) en présence ou non d'un solvant, comme décrit par exemple dans les brevets US5827806 et US6303746,
- du soufre en présence ou non d'un solvant et éventuellement d'une base minérale, comme par exemple décrit dans le brevet EP1123930.

Selon le procédé utilisé, les réactions mises en oeuvre peuvent générer des sous-produits indésirables, parmi lesquels on peut citer des composés phénoliques chlorés, par exemple chlorophénols et chloro-(alkyl)phénols, mais aussi du soufre et des composés soufrés, tels que des dérivés thiophéniques, par exemple du 3-méthylthiophène, ou tels que des mercaptans, par exemple des mercapto-alkylphénols. Par ailleurs, du phénol et/ou des alkylphénols résiduels, de l'acide chlorhydrique, et autres impuretés peuvent subsister dans le produit final.

Même en opérant avec des procédés très sélectifs, avec des conditions minimisant la formation de tels sous-produits, et après purification du produit final employant une ou plusieurs techniques de purification connues de l'homme du métier, telles que distillation, recristallisation et autres, des très faibles quantités des impuretés et produits indésirables précités peuvent subsister dans le produit final.

Or ces impuretés et produits indésirables sont notamment responsables des odeurs désagréables, nauséabondes, fortes, voire agressives, dégagées par certains poly(sulfures de phénol) utilisés aujourd'hui, en particulier dans les divers produits préparés à partir de, ou traités par, ou encore comprenant de tels poly(sulfures de phénol). Aussi les industriels sont-ils parfois réticents à utiliser les poly(sulfures de phénol), malgré leur grande efficacité et leurs très bonnes propriétés, en raison du fait que les utilisateurs des produits finis peuvent être gênés par les odeurs rémanentes desdits poly(sulfures de phénol) dans lesdits produits finis.

Ces odeurs désagréables voire nauséabondes pourraient amener les industriels à préférer d'autres additifs générant moins d'odeurs nauséabondes mais qui pourraient se révéler moins efficaces que les poly(sulfures de phénol).

II reste par conséquent un besoin pour des composés de type poly(sulfures de phénol) moins odorants, ou tout au moins dont les odeurs dégagées sont moins agressives, voire plus agréables, voire quasiment inexistantes ou encore masquées, afin de pouvoir disposer de poly(sulfures de phénol) plus agréables à utiliser et de produits finis dénués d'odeurs ou dont les odeurs de poly(sulfures de phénol) sont masquées.

La Demanderesse a maintenant découvert qu'il est possible de masquer les odeurs, ou encore d'odoriser, les poly(sulfures de phénol) afin de permettre leurs utilisations et les utilisations des produits manufacturés à partir desdits poly(sulfures de phénol), sans être incommodés par les odeurs intrinsèques de ces poly(sulfures de phénol), et sans altérer leurs propriétés, i.e. tout en conservant leurs propriétés.

L'élimination ou le masquage d'odeurs de produits organiques, organiques, artificiels ou synthétiques, est un domaine bien connu et largement décrit dans l'art antérieur. À ce sujet, on peut citer en particulier la demande US2011/0024678 qui décrit le masquage d'odeur de composés organiques soufrés, tels que les sulfures, disulfures et polysulfures de dialkyle ou leurs correspondants oxydés, ainsi que le brevet US5559271 qui décrit plus précisément le masquage d'odeur de polysulfures organiques de formule générale R-Sₓ-R, où R est un radical aliphatique.

Contrairement aux poly(sulfures de phénol), ces composés de l'art antérieur possèdent un atome de soufre relié à un radical alkyle et aussi bien leurs structures chimiques que leurs procédés de préparation sont suffisamment différents pour que les odeurs qu'ils dégagent soient de nature totalement différente de celles desdits poly(sulfures de phénol).

L'art antérieur ne fournit ainsi aujourd'hui aucune solution satisfaisante pour éliminer, ou tout au moins masquer, la ou les odeurs des poly(sulfures de phénol) et des produits dérivés qui les contiennent ou à partir desquels ils ont été fabriqués.

Ainsi, le document US 2,621,172 divulgue la synthèse d'une composition issue de la réaction d'un composé terpène bicyclique-sulfure de phosphore avec un phénol alkylé ou un alcool, ladite composition ayant une odeur désagréable semblable à l'odeur de l'ail. Afin d'atténuer l'odeur d'ail, ce document propose d'ajouter du chlorure de soufre en fin de réaction.

Le document US 2011/213120 divulgue un procédé de préparation d'esters de colophane dont la mauvaise odeur est atténuée par l'utilisation de polyols au cours de la réaction de synthèse. Le procédé selon ce document comprend une réaction de dismutation de colophane ayant des isomères PAN en présence d'un agent de dismutation qui peut être choisi parmi les sulfures de phénol. Aucun de ces documents ne décrit de composition ternaire masquante d'odeur.

De manière surprenante, la Demanderesse a maintenant découvert qu'il est possible de masquer en totalité ou au moins en partie les odeurs de poly(sulfures de phénol) en y ajoutant une très faible quantité d'au moins un agent masquant d'odeur. L'ajout d'au moins un agent masquant d'odeur dans au moins un poly(sulfure de phénol) permet d'obtenir une composition comportant ledit au moins un poly(sulfure de phénol) ou un produit préparé à partir dudit au moins un tel poly(sulfure de phénol), dont l'odeur a disparu, a été masquée, ou tout au moins dont l'odeur est nettement moins désagréable. Ce masquage d'odeur permet ainsi une manipulation plus aisée et moins contraignante pour l'utilisateur, et permet également la préparation de produits finis dont les odeurs sont moins désagréables et moins gênantes pour les utilisateurs finaux.

Ainsi, et selon un premier aspect, la présente invention concerne une composition comprenant :
a) au moins 50% et de préférence au moins 70%, de préférence encore au moins 80%, de manière tout à fait préférée au moins 90% en poids d'au moins un poly(sulfure de phénol) ; et
b) de quelques ppm, avantageusement de 10 ppm, à 2%, de préférence de 10 ppm à 1 % en poids par rapport au poids total de la composition, d'au moins un agent masquant d'odeur comprenant au moins un composé choisi parmi b1) les alcools, b2) les esters, b3) les aldéhydes, b4) les cétones et b5) les éthers ;
ledit agent masquant d'odeur comprenant :
- au moins un alcool b1), au moins un ester b2) et au moins un aldéhyde b3) ou
- au moins un ester b2), au moins une cétone b4) et au moins un éther b5).

Dans le contexte de la présente invention, on entend par poly(sulfure de phénol), les oligomères ou polymères répondant à la formule (1) suivante : 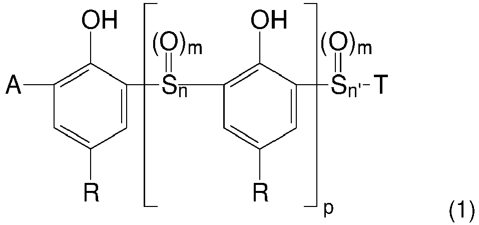 dans laquelle :
- R représente un atome d'hydrogène ou un groupement hydrocarboné, linéaire, ramifié et/ou cyclique, totalement ou partiellement saturé ou insaturé, comportant de 1 à 20 atomes de carbones ;
- n et n', identiques ou différents, représentent indépendamment l'un de l'autre un entier supérieur ou égal à 1, de préférence compris entre 1 et 8, de préférence encore entre 1 et 6, plus préférentiellement compris entre 1 et 4, bornes incluses ;
- p représente un entier compris entre 0 et 100, de préférence compris entre 0 et 50, de préférence encore compris entre 0 et 40 bornes incluses ;
- A représente un atome d'hydrogène, et T représente un radical de formule(2) : 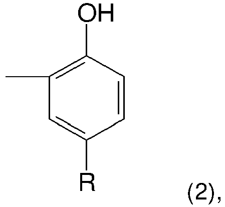 ou bien, uniquement lorsque p est strictement supérieur à 0, A et T peuvent former ensemble une liaison simple, de manière à former un poly(sulfure de phénol) cyclique ; et
- m représente 0, 1 ou 2.

On préfère les composés de formule (1) dans lesquels R représente un radical alkyle, linéaire ou ramifié, comportant de 1 à 20 atomes de carbone, de préférence de 1 à 12 atomes de carbone. Selon un mode de réalisation préféré, le radical R est choisi parmi les radicaux méthyle, éthyle, n-propyle, iso-propyle, n-butyle, iso-butyle, tert-butyle, n-pentyle, amyle, iso-amyle, *tert*-amyle, hexyles, heptyles, octyles et nonyles. Le radical R peut également être substitué par un ou plusieurs groupements cycliques, par exemple par un groupement aromatique, et typiquement R peut représenter un radical phénylprop-2-yle, comme décrit dans la demande US2007/0093613.

On préfère également les composés de formule (1) pour lesquels n et n', identiques ou différents sont choisis indépendamment l'un de l'autre parmi 1, 2, 3 et 4, et de préférence n et n' sont choisis indépendamment l'un de l'autre parmi 2, 3 et 4, de manière tout à fait préférée, n et n' représentent chacun le nombre entier 2.

On préfère en outre les composés de formule (1) dans lesquels n et n' représente chacun le nombre 1, lorsque m représente 1 ou 2. Dans un mode de réalisation préféré de l'invention, les composés de formule (1) sont ceux dans lesquels m représente 0.

Selon un autre mode de réalisation, on préfère les composés de formule (1) pour lesquels p représente un entier compris entre 1 et 40, de préférence compris entre 2 et 30, de préférence encore compris entre 3 et 25 bornes incluses.

II doit être compris que la composition selon la présente invention peut comprendre plus d'un poly(sulfure de phénol) de formule (1) et en particulier plusieurs poly(sulfures de phénol) pour lesquels n et n', identiques ou différents, sont choisis indépendamment l'un de l'autre parmi 2, 3 et 4. Dans de tels mélanges de poly(sulfures de phénol), la valeur moyenne de n et la valeur moyenne de n' sont de préférence chacune voisine de 2.

De même, lorsque plusieurs poly(sulfures de phénol) sont compris dans la composition selon la présente invention, les valeurs p des poly(sulfures de phénol) peuvent être identiques ou différentes les unes des autres, et la valeur moyenne de p, dans de tels mélanges de poly(sulfures de phénol), peut typiquement être d'environ 5 à environ 10, bornes incluses.

Selon encore un mode de réalisation, la composition selon la présente invention, peut être formulée avec un ou plusieurs additifs ou charges, parmi lesquels on peut citer les acides gras, par exemple l'acide stéarique, la silice, par exemple le gel de silice, l'urée et les dérivés d'urée.

Les poly(sulfures de phénol) utilisés dans les compositions selon la présente invention, sont bien connus de l'homme du métier et peuvent être tout particulièrement les poly(sulfures de phénol) commercialisés par la société Arkema sous la dénomination générique Vultac^{®}, parmi lesquels on peut citer les Vultac^{®} 2, Vultac^{®} 3, Vultac^{®} 5, Vultac^{®} TB7, Vultac^{®} 700, Vultac^{®} 710, Vultac^{®} TB710, et autres Vultac^{®}.

On peut également citer d'autres poly(sulfures de phénol) similaires, tels les GUS-34 et GUS-37 commercialisés par M&B GreenUS Co. Ltd., les RPS2, RPS5A, RPS5B, RPS700, RPS710 commercialisés par Jinan Evergrowing Rubber Additeve Co. Ltd., les Tackirol AP et Tackirol V200 commercialisés par la société TAOKA Chemical Co., les Ethanox^{®}, et en particulier l'Ethanox^{®} 323 et l'Ethanox^{®} 323A de la société Albemarle, ainsi que le Dragonox 323 de la société Flying Dragon et le GY 323 du Guangzhou Research Institute.

Ainsi, les composants a) de la composition selon la présente invention, en particulier les Vultac^{®}, sont aisément disponibles dans le commerce ou peuvent être préparés selon tous procédés connus de l'homme du métier, et décrits dans la littérature scientifique et brevets.

II doit être compris que l'invention concerne également les compositions comprenant les dérivés de poly(sulfures de phénol) de formule (1) décrite ci-dessus et notamment les composés de formule (1) dans lesquels la fonction hydroxyle du phénol a été modifiée (par exemple alkoxylée) et/ou les radicaux R des groupements phénoliques ont été modifiés (par exemple substitués, fonctionnalisés, et autre).

Il a maintenant été découvert que l'odeur des poly(sulfures de phénol) (composant a) de la composition de l'invention) peut être masquée de manière efficace par ajout d'au moins un agent masquant d'odeur (composant b) de la composition de l'invention).

La quantité d'agent masquant (composant b)) peut varier dans de grandes proportions dans la plage indiquée précédemment, selon l'effet souhaité, l'intensité de l'odeur à masquer, les teneurs résiduelles respectives des diverses impuretés pouvant être présentes dans le(s) composant(s) a) précédemment définis, et autres.

Des quantités d'agent masquant inférieures à quelques ppm peuvent être trop faibles pour obtenir l'effet souhaité. Des quantités d'agent masquant supérieures à 2% peuvent être rédhibitoires d'un point de vue économique, ou avoir des effets néfastes selon les applications visées pour les poly(sulfures de phénol) et qui seront décrites plus loin dans la description.

De préférence, et de manière non limitative, la teneur en agent(s) masquant d'odeur b) est comprise entre 0,001% et 1% en poids, bornes incluses, par rapport au poids total de la composition, de préférence comprise entre 0,001% et 0,5% en poids, bornes incluses, par exemple environ 0,1% en poids.

La présente invention présente l'avantage de masquer l'odeur désagréable d'au moins un poly(sulfure de phénol), sans en modifier chimiquement la nature. Ainsi, la présente invention propose une composition comprenant a) une quantité majoritaire d'au moins un poly(sulfure de phénol) de formule (1), ou au moins un dérivé de poly(sulfure de phénol) de formule (1), à laquelle est ajoutée une quantité minoritaire d'une composition b) masquant l'odeur désagréable du ou des composant(s) a).

La composition à odeur masquée selon la présente invention peut être préparée selon tout procédé connu en soi en combinant simplement au moins un composant a) avec au moins une composition b) de masquage d'odeur. On peut par exemple ajouter au moins une composition b) à au moins un composant a), ou vice-versa, éventuellement sous agitation et/ou éventuellement en chauffant.

Plus généralement, toute méthode connue de mélange et/ou de chauffage peut être utilisée. La préparation de la composition selon l'invention peut par exemple être effectuée sous pression atmosphérique, à une température comprise entre 0°C, de préférence comprise entre la température ambiante, et 250°C à 300°C du composant a), lorsque celui-ci est sous forme solide. On préfère tout particulièrement effectuer le mélange à une température supérieure à la température de fusion du composant a). La préparation peut également être effectuée sous pression ou sous dépression, à des températures comprises dans les gammes indiquées ci-dessus.

En variante, et selon un mode de réalisation préféré, le composant b) peut être ajouté au cours de la synthèse du composant a), et tout particulièrement en fin de synthèse du composant a), lorsqu'il est encore présent à l'état fondu, ou dans le solvant de réaction, avant de récupérer le composant a) sous forme solide, lorsque le composant a) est sous forme solide à température et pression ambiantes.

La période de temps requise pour la préparation de la composition à odeur masquée selon l'invention varie selon la nature et la quantité du ou des composant(s) a) et de la ou des composition(s) b), mais aussi en fonction de la température et de la pression choisies. En règle générale, cette durée correspond à la durée nécessaire pour obtenir un mélange homogène et produisant l'effet recherché de masquage d'odeur du ou des composant(s) a) ; elle est généralement comprise entre quelques secondes et quelques minutes, voire une ou plusieurs heures. Le procédé de préparation mentionné ci-dessus peut être réalisé par lots (procédé « batch ») ou encore en continu.

Comme indiqué précédemment, l'agent masquant d'odeur b) comprend :
- au moins un alcool b1), au moins un ester b2) et au moins un aldéhyde b3) ou
- au moins un ester b2), au moins une cétone b4) et au moins un éther b5).

L'agent masquant d'odeur comprend ainsi au moins un alcool b1) qui peut être de tout type et avantageusement choisi parmi les mono-alcools, comprenant de 1 à 40 atomes de carbone, de préférence de 6 à 35 atomes de carbone, de préférence encore de 8 à 30 atomes de carbone, lesdits atomes de carbone formant une chaîne linéaire ou ramifiée comportant éventuellement une ou plusieurs insaturation(s) sous forme de double(s) liaison(s), et comportant éventuellement une structure cyclique à 5 ou 6 chaînons, saturée, ou totalement ou partiellement insaturée.

Comme exemples illustratifs, mais non limitatifs, d'alcools b1), on peut citer de préférence les mono-alcools, dont la fonction hydroxyle est de préférence portée par un atome de carbone sp², et parmi ceux-ci ceux comprenant en outre éventuellement au moins un radical aryle. Par « radical aryle », on entend un radical hydrocarboné aromatique, choisi de préférence parmi phényle et naphtyle, éventuellement substitué par un ou plusieurs groupements choisis de préférence parmi alkyle, alcényle, alkoxy, carbonyle et alkoxycarboyle. De préférence le radical aryle est un radical phényle.

Ainsi, le composant b1) est de préférence un alcool comportant un radical aryle, de préférence encore un alcool primaire comportant un radical aryle, et de manière tout particulièrement préféré un hydroxy-alkylbenzène, par exemple choisi parmi, et de manière non limitative, parmi l'alcool benzylique, le phényléthanol, le propyléthanol, le butyléthanol, et autre, ainsi que les mélanges de deux ou plusieurs d'entre eux en toutes proportions.

II doit être entendu que les phénols utilisés comme produit de départ dans la synthèse des poly(sulfure de phénol) de formule (1) telle que décrite précédemment, ne font pas partie des alcools b1) de l'agent masquant d'odeur b).

Toutefois, des phénols substitués par un ou plusieurs groupements alkoxy peuvent être utilisés à titre d'alcool b1). Parmi ces alkoxyphénols, on peut citer par exemple, et de manière non limitative les 2-méthoxyphénols, et en particulier les 2-méthoxyphénols substitués en position 4 par un radical alkyle ou alcényle, où alkyle et alcényle comprennent les radicaux méthyle, éthyle, propyles, butyles, pentyles, hexyles, propényles, butényles, pentényles et héxényles, la marque du pluriel sur ces radicaux indiquant que leurs isomères sont inclus dans cette liste non exhaustive.

Les esters b2) de l'agent masquant d'odeur b) présent dans la composition de l'invention peuvent être en général de tous types connus de l'homme du métier, mais on préfère tout particulièrement les esters des alcools b1) listés précédemment, c'est-à-dire les esters de mono-alcools primaires, de préférence comportant un noyau aromatique et de préférence encore les esters formés à partir d'hydroxy-alkylphénols.

Comme exemples illustratifs, mais non limitatifs, d'esters mentionnés sous b2), on peut citer les esters d'acides en C₂-C₂₀ saturés ou insaturés, tels que les acétates, propionates, butyrates, méthylbutyrates, pentanoates, hexanoates, heptanoates, benzoates, hydroxybenzoates, cyclopropylcarboxylates, cyclobutylcarboxylates, cyclopentylcarboxylates, cyclohexylcarboxylates, citrates, caproates, oléates, linoléates, linolénates, d'alkyle (linéaire ou ramifié, par exemple d'éthyle, de propyle, de butyle, de pentyle, de 2-méthylbutyle, d'iso-amyle, d'hexyle), d'alcényle (linéaire ou ramifié comportant de 3 à 12 atomes de carbone), d'aryle (par exemple de benzyle, de phényléthyle), de dérivés de terpènes (par exemple de menthyle, de carvyle), et autres, ainsi que leurs mélanges.

Parmi les esters b2), on peut également citer les esters cycliques ou lactones, également dénommés alcanolides. On préfère les alcanolides ne comportant pas de double liaison et les alcanolides comportant une seule double liaison intracyclique.

Parmi les esters b2), sont plus particulièrement préférés, à titre d'exemples non limitatifs, l'acétate de benzyle, l'acétate de phényléthyle, le 2-hydroxybenzoate de méthyle, le 2-hydroxybenzoate de benzyle, les butyrolactones, et les alcanolides comportant de 6 à 12 atomes de carbone, par exemple les décanolides, undécanolides, dodécanolides, cyclopentadécanolides, oxacyclohexadécénones, ainsi que les pyranones, et benzopyranones, et les mélanges de deux ou plusieurs de ces composés.

L'agent masquant d'odeur b) peut en outre comprendre au moins un aldéhyde b3) et/ou au moins une cétone b4), et de préférence au moins un aldéhyde et/ou au moins une cétone répondant à la formule R^{a}-CO-R^{b}, dans laquelle R^{a} représente une chaîne hydrocarbonée comportant de 1 à 20 atomes de carbone, linéaire, ramifié ou cyclique, saturée ou partiellement ou totalement insaturée, éventuellement substituée par un ou plusieurs radicaux choisis parmi hydroxy, alcolxy, aryle, et R^{b} représente l'atome d'hydrogène (cas des aldéhydes), ou bien (cas des cétones) une chaîne hydrocarbonée de 6 à 12 atomes de carbone linéaire, ramifiée ou cyclique, saturée ou partiellement ou totalement insaturée, éventuellement substituée par un ou plusieurs radicaux choisis parmi hydroxy, alcolxy, cycloalkyle, cycloalcényle, et aryle, aryle étant tel que défini précédemment.

Comme exemples illustratifs, mais non limitatifs, d'aldéhydes b3), on peut citer de préférence le propanal, le butanal, le pentanal, l'hexanal, l'heptanal, l'octanal, le nonanal, le décanal, le undécanal, le docdécanal, le benzaldéhyde, le géranial, le néral, le citronellal, ainsi que leurs homologues substitués, par exemple les hydroxydécanals les phénylpropanals, les phénylbutanals, les phénylpentanals, les phénylhexanals, les hydroxybenzaldéhydes, les alkoxybenzaldéhydes, et autres, ainsi que leurs homologues substitués, et les mélanges de deux ou plusieurs de ces aldéhydes, en toutes proportions.

Comme exemples illustratifs, mais non limitatifs, de cétones b4), on peut citer de préférence la propanone, la butanone, la pentanone, l'hexanone, l'heptanone, l'octanone, la nonanone, la décanone, la undécanone, la dodécanone, et de préférence leurs homologues substitués, ainsi que les cétones cycliques parmi lesquelles on peut citer la menthone, l'iso-menthone, les ionones, les méthylionones, les phényléthanones, les benzopyranones, le 1,8-cinéole, l'ascaridole, la flavonone, la calone, la galbascone, et autres, ainsi que leurs homologues substitués, et les mélanges de deux ou plusieurs de ces cétones, en toutes proportions.

Par « homologues substitués », on entend les aldéhydes et cétones précités substitués par un ou plusieurs radicaux, qui peuvent être par exemple, et de manière non limitative, choisis parmi les radicaux alkyle, hydroxy, aryle, arylalkyle. Des exemples de tels homologues substitués comprennent, de manière non exhaustive, le 3-(4-éthylphényl)-2,2-diméthylpropanal, le 3-(2-éthylphényl)-2,2-diméthylpropanal, le 7-hydroxydécanal, le 7-hydroxy-3,7-diméthyloctanal, le 2-méthoxybenzaldéhyde, le 4-méthoxybenzaldéhyde, la 4-(4-hydroxyphényl)butan-2-one, et autres, ainsi que leurs mélanges.

L'agent masquant d'odeur b) peut en outre comprendre au moins un éther b5), et de préférence au moins un éther répondant à la formule R'^{a}-O-R'^{b}, dans laquelle R'^{a} et R'^{b}, identiques ou différents, représentent indépendamment l'un de l'autre une chaîne hydrocarbonée comportant de 1 à 20 atomes de carbone, linéaire, ramifié ou cyclique, saturée ou partiellement ou totalement insaturée, éventuellement substituée par un ou plusieurs radicaux choisis parmi hydroxy, alcolxy, cycloalkyle, cycloalcényle et aryle, aryle étant tel que défini précédemment.

Comme exemples illustratifs, mais non limitatifs, d'éthers b5), qui peuvent être symétriques ou non symétriques, cycliques ou non cycliques, on peut citer de préférence, les dialkyléthers éventuellement substitués (par exemples les bis-hydroxypropyléthers), les pyranes, les furanes, les benzopyranes, les benzofuranes, les naphtopyranes, les naphtofuranes, et autres, ainsi que leurs homologues substitués, et les mélanges de deux ou plusieurs de ces éthers, en toutes proportions.

En outre, l'agent masquant d'odeur b) utilisable dans le cadre de la présente invention peut comprendre, en quantités minoritaires, d'autres agents (fragrances) habituellement utilisés dans le domaine de la parfumerie, tels que acides gras, glycols, composés terpéniques, et autres bien connus de l'homme du métier.

La composition b) destinée à masquer l'odeur poly(sulfures de phénol), et telle que décrite précédemment peut, le cas échéant, voir si nécessaire, comprendre en outre un ou plusieurs additifs couramment utilisés dans le domaine. De tels additifs peuvent par exemple être choisis parmi, et de manière non limitative, les solvants, les pigments, les colorants, les conservateurs, les biocides, et autres.

Parmi les solvants, des exemples tout particulièrement préférés sont les alcools, les éthers, les esters et les glycols. De manière particulièrement avantageuse, le solvant est choisi parmi le phtalate de diéthyle, l'éthylène glycol, le propylène glycol, le di-éthylène glycol, le dipropylène glycol, les poly-éthylène glycols, les polypropylène glycols, et leurs mélanges, et de manière encore plus avantageuse parmi le phtalate de diéthyle, le dipropylène glycol, et leurs mélanges.

Selon un aspect préféré, l'agent masquant d'odeur utilisé dans la composition de la présente invention est choisi parmi les agents masquant d'odeurs comprenant :
- au moins un composant b1), au moins un composant b2) et au moins un composant b3) ;
- au moins un composant b1), au moins un composant b2), au moins un composant b3) et au moins un composant b4) ;
- au moins un composant b1), au moins un composant b2), au moins un composant b3) et au moins un composant b5) ;
- au moins un composant b1), au moins un composant b2), au moins un composant b3), au moins un composant b4) et au moins un composant b5) ;
- au moins un composant b2), au moins un composant b4) et au moins un composant b5) ;
- au moins un composant b2), au moins un composant b3), au moins un composant b4) et au moins un composant b5).

Selon un aspect encore plus préféré, l'agent masquant d'odeur utilisé dans la composition de la présente invention est choisi parmi les agents masquant d'odeurs qui comprennent :
- au moins un composant b1), au moins un composant b2) et au moins un composant b3) ;
- au moins un composant b1), au moins un composant b2), au moins un composant b3) et au moins un composant b4) ;
- au moins un composant b1), au moins un composant b2), au moins un composant b3) et au moins un composant b5) ;
- au moins un composant b1), au moins un composant b2), au moins un composant b3), au moins un composant b4) et au moins un composant b5) ;
- au moins un composant b2), au moins un composant b3), au moins un composant b4), et au moins un composant b5) ; et
- au moins un composant b2), au moins un composant b4), et au moins un composant b5).

Comme indiqué précédemment, la composition selon la présente invention comprend au moins une composition d'agent masquant d'odeur b). Selon un mode de réalisation, ledit agent comprend au moins un composant b1), au moins un composant b2) et au moins un composant b3), chacun des composant b1), b2) et b3), est présent en une quantité supérieure ou égale à 1%, de préférence supérieure ou égale à 10% en poids par rapport au poids total de l'agent masquant d'odeur b).

Selon un autre mode de réalisation préféré, la composition selon la présente invention comprend au moins une composition d'agent masquant d'odeur b) comprenant au moins un composant b2), au moins un composant b4) et au moins un composant b5), chacun des composant b2), b4) et b5), est présent en une quantité supérieure ou égale à 1%, de préférence supérieure ou égale à 10% en poids par rapport au poids total de l'agent masquant d'odeur b).

On préfère également les agents masquant d'odeur b), qui, lorsqu'ils comprennent au moins une cétone b4), comprennent une quantité de cétone(s) b4) comprise entre 0,1% et 40% en poids, de préférence entre 0,1% et 10% en poids, bornes incluses, par rapport au poids total de l'agent masquant d'odeur.

L'agent masquant d'odeur b) peut éventuellement comprendre également jusqu'à 20%, de préférence de 0,1 % à 10%, de préférence encore de 0,1 % à 1% en poids par rapport au poids total de l'agent masquant d'odeur, d'au moins une fragrance habituellement utilisée dans le domaine de la parfumerie.

Selon un mode de réalisation préféré, l'agent masquant d'odeur b) comprend :
- au moins 1% en poids, et de préférence au moins 10% en poids, d'au moins un alcool b1),
- au moins 1% en poids, et de préférence au moins 10% en poids, d'au moins un ester b2),
- au moins 1% en poids, et de préférence au moins 10% en poids, d'au moins un aldéhyde b3), et
- le complément à 100% comprenant au moins une cétone b4) et/ou au moins un éther b5) et/ou une ou plusieurs autres fragrances et/ou additifs, comme indiqué précédemment.

Un agent masquant d'odeur b) typiquement adapté pour les poly(sulfures de phénol) selon la présente invention, comprend en poids :
- au moins 1% en poids, et de préférence au moins 10% en poids, d'au moins un alcool b1), choisi parmi l'alcool benzylique, le phényléthanol, le propyléthanol et le butyléthanol, ainsi que leurs mélanges en toutes proportions,
- au moins 1% en poids, et de préférence au moins 10% en poids, d'au moins un ester b2), choisi parmi l'acétate de benzyle, l'acétate de phényléthyle, le 2-hydroxybenzoate de méthyle, le 2-hydroxybenzoate de benzyle, les butyrolactones, et les hexanolides comportant de 6 à 12 atomes de carbone, ainsi que leurs mélanges en toutes proportions,
- au moins 1% en poids, et de préférence au moins 10% en poids, d'au moins un aldéhyde b3), choisi parmi le 3-(4-éthylphényl)-2,2-diméthylpropanal, le 3-(2-éthylphényl)-2,2-diméthylpropanal, le 7-hydroxydécanal, le 7-hydroxy-3,7-diméthyloctanal, le 2-méthoxybenzaldéhyde, le 4-méthoxybenzaldéhyde, ainsi que leurs mélanges en toutes proportions, et
- le complément à 100% comprenant au moins une cétone b4) et/ou au moins un éther b5) et/ou une ou plusieurs autres fragrances et/ou additifs, comme indiqué précédemment.

Cette composition, notée C1 dans la suite du présent exposé, est tout particulièrement adaptée pour le masquage de l'odeur, pour l'amélioration de l'odeur, des poly(sulfures de phénol) de formule (1) décrite précédemment (composant a), et en particulier des poly(sulfures de phénol) commercialisés par la société Arkema sous le nom générique de Vultac^{®}.

Selon encore un autre mode de réalisation préféré, l'agent masquant d'odeur b) comprend :
- au moins 1% en poids, et de préférence au moins 10% en poids, d'au moins un ester b2),
- au moins 1% en poids, et de préférence au moins 10% en poids, d'au moins une cétone b4),
- au moins 1% en poids, et de préférence au moins 10% en poids, d'au moins un éther b5), et
- le complément à 100% comprenant au moins un alcool b1) et/ou au moins un aldéhyde b3) et/ou une ou plusieurs autres fragrances et/ou additifs, comme indiqué précédemment.

Un agent masquant d'odeur b) correspondant à ce mode de réalisation et également typiquement adapté pour les poly(sulfures de phénol) selon la présente invention, comprend en poids :
- au moins 1% en poids, et de préférence au moins 10% en poids, d'au moins un ester b2), choisi parmi les esters cycliques de type alcanolide, tels que définis précédemment,
- au moins 1% en poids, et de préférence au moins 10% en poids, d'au moins une cétone b4), choisie parmi la menthone, l'iso-menthone, les ionones, les méthylionones, les phényléthanones, les benzopyranones, le 1,8-cinéole, l'ascaridole, la flavonone, la calone, la galbascone, et autres, ainsi que leurs homologues substitués, et les mélanges de deux ou plusieurs de ces cétones, en toutes proportions,
- au moins 1% en poids, et de préférence au moins 10% en poids, d'au moins un éther b5), choisi parmi les dialkyléthers éventuellement substitués (par exemples les bis-hydroxypropyléthers), les pyranes, les furanes, les benzopyranes, les benzofuranes, les naphtopyranes, les naphtofuranes, et autres, ainsi que leurs homologues substitués, et les mélanges de deux ou plusieurs de ces éthers, en toutes proportions, et
- le complément à 100% comprenant au moins un alcool b1) et/ou au moins un aldéhyde b3) et/ou une ou plusieurs autres fragrances et/ou additifs, comme indiqué précédemment.

Cette composition, notée C2 dans la suite du présent exposé, est également tout particulièrement adaptée pour le masquage de l'odeur, pour l'amélioration de l'odeur, des poly(sulfures de phénol) de formule (1) décrite précédemment (composant a), et en particulier des poly(sulfures de phénol) commercialisés par la société Arkema sous le nom générique de Vultac^{®}.

Ces compositions d'agents masquant d'odeur des poly(sulfures de phénol) de formule (1), et en particulier les compositions C1 et C2 décrites ci-dessus, sont données à titre d'exemples et n'ont rien de restrictif quant à la diversité potentielle des compositions que permet la présente invention définie à l'aide des revendications annexées.

Une composition tout particulièrement préférée selon la présente invention comprend :
a) au moins 50% et de préférence au moins 70%, de préférence encore au moins 80%, de manière tout à fait préférée au moins 90% en poids d'au moins un poly(sulfure de phénol) de formule (1) telle que définie précédemment ; et
b) de quelques ppm, avantageusement de 10 ppm, à 2% en poids, de préférence de 10 ppm à 1% en poids par rapport au volume total de la composition, d'au moins une composition C1 ou d'une composition C2, telles que définies précédemment.

Selon un autre aspect, la présente invention concerne l'utilisation d'au moins un agent masquant d'odeur b) tel qu'il vient d'être défini pour atténuer, ou encore masquer l'odeur d'au moins un poly(sulfure de phénol), ou d'une composition comprenant au moins un poly(sulfure de phénol), notamment un poly(sulfure de phénol) de formule (1) telle que définie précédemment, et en particulier d'un poly(sulfure de phénol) de la famille des Vultac^{®} commercialisé par la société Arkema.

Les compositions selon la présente invention comprenant majoritairement au moins un poly(sulfure de phénol) a) et au moins un agent masquant d'odeur b) trouvent des utilisations tout à fait avantageuses dans de nombreux domaines, et en particulier dans tous les domaines connus d'utilisation des poly(sulfures de phénol).

Ainsi, les compositions à odeur masquée selon l'invention peuvent par exemple être utilisées, à titre d'exemples non limitatifs, en tant qu'agents antioxydants et/ou stabilisants thermiques pour les matières plastiques ou pour les huiles, en tant que retardateurs de flamme pour les matières plastiques ou bien encore pour les fibres synthétiques ou végétales, en tant qu'agents de protection du bois, en tant qu'agents de dismutation et blanchiment des résines végétales, en tant qu'agents de contrôle de charge pour toner, et autres, pour ne citer que quelques utilisations principales.

Les divers produits obtenus en utilisant une composition à odeur masquée selon l'invention présentent également une odeur atténuée, voire ne présentent aucune odeur désagréable ou irritante. En effet, de manière surprenante, l'agent masquant d'odeur présent dans la composition selon l'invention reste stable et permet l'obtention de produits, même lorsqu'ils sont préparés à des températures comprises entre 25 et 300°C, et ne présentent eux-mêmes pas d'odeur désagréable pour l'utilisateur final, comme ressentie lorsqu'ils sont préparés avec des compositions de poly(sulfures de phénol) à odeur non masquée.

Selon encore un autre aspect, la présente invention concerne un produit manufacturé préparé avec au moins une composition selon la présente invention. Des exemples de tels produits sont, à titre d'exemples non limitatifs, les produits à base d'élastomère, tel que des pneus ou des parties de pneus, par exemple bande roulement, revêtement intérieur, et autres, les produits à base de résines thermoplastiques, y compris les mélanges-maîtres comprenant un polymère et au moins une composition de poly(sulfure de phénol) selon l'invention, tel que par exemple les mélanges-maîtres commercialisés par la société MLPC sous la dénomination commerciale Mixland^{®}, par exemple ceux dans lesquels est dispersé un mélange de poly(sulfure de phénol) et d'urée et auxquels on peut additionner au moins un agent masquant d'odeur b) selon l'invention.

Parmi les produits manufacturés et préparés avec au moins une composition selon la présente invention, on peut également citer les produits à base de colophane, à base de fibres végétales, telles que coton ou laine, les produits à base de polystyrène expansé, les composants de toners pour impression, les produits à base de bois traité avec des poly(sulfures de phénol), et autres.

La présente invention est maintenant illustrée par les exemples qui suivent et qui sont présentés sans aucune intention de limiter les divers modes de réalisation de l'invention.

### Exemple 1 :

### Composition à base de poly(sulfure de phénol) à odeur masquée

Afin de caractériser les compositions à odeur masquée selon l'invention, une procédure de test olfactif a été mise au point. Cette procédure permet de classer différentes compositions de manière hédonique.

### Conditions opératoires :

Pour réaliser ce test olfactif, on utilise des fûts en polyéthylène (PE) de 30 litres, chacun muni d'un couvercle dans lequel est découpée une trappe d'environ 10 cm x 10 cm, permettant à un opérateur (panéliste) de sentir les vapeurs contenues dans le fût.

Dans chacun des fûts est placé un cristallisoir contenant environ 25 grammes de composition à tester. Les fûts sont conservés fermés pendant 24 heures à température ambiante. L'évaluation est réalisée ensuite en aveugle.

Les panélistes, au nombre de 10, viennent à tour de rôle pour tester quelques produits par séance (au maximum 3 produits par séance). Ils commencent par sentir le fût dans lequel se trouve le poly(sulfure de phénol) de référence (sans agent masquant d'odeur), puis une des compositions à tester. Le poly(sulfure de phénol) de référence est le Vultac^{®} 3 commercialisé par la société Arkema. Cet échantillon est nommé V.

Les panélistes attribuent, selon leur préférence, une note à chacune des compositions à tester, par rapport à la référence qui a reçu arbitrairement la note 5. Les notes données par les panélistes vont de 1 (produit le plus agréable) à 10 (produit le plus désagréable).

### Préparation des échantillons de test :

Une quantité connue de Vultac^{®} 3 (environ 25 grammes) est mise à l'étuve à la température de 165°C, dans une coupelle en aluminium. Lorsque le Vultac^{®} 3 est fondu et parfaitement agitable, on introduit une quantité donnée d'un agent masquant d'odeur à l'aide d'une pipette. On agite à l'aide d'une tige en verre pendant 1 min.

Après 10 minutes, on agite de nouveau pendant 1 mn. L'ensemble est placé encore 15 min à l'étuve. On laisse ensuite refroidir à température ambiante et le Vultac^{®} 3 odorisé est récupéré.

Les échantillons sont alors testés selon le protocole décrit plus haut. Les échantillons préparés sont détaillés dans le tableau 1 suivant :

**-- Tableau 1 --**

| ***Échantillon*** | ***Quantité de Vultac^{®} 3 (g)*** | ***Agent masquant d'odeur*** | ***Quantité d'agent masquant d'odeur (mg,* % *en poids)*** |
|---|---|---|---|
| V | 25,10 | - | - |
| 1 | 25,30 | C1 | 25 mg, soit 0,1% |
| 2 | 25,33 | C1 | 63 mg, soit 0,25% |
| 3 | 25,25 | C1 | 126 mg, soit 0,5% |
| 4 | 25,31 | C2 | 25 mg, soit 0,1% |
| 5 | 25,20 | C2 | 63 mg, soit 0,25% |
| 6 | 25,25 | C2 | 126 mg, soit 0,5% |
| 7 (comparatif) | 25,20 | limonène | 25,5 mg soit 0,1% |
| 8 (comparatif) | 25,15 | β-pinène | 25,7 mg soit 0,1% |

Les résultats du test olfactif sont reproduits dans le tableau 2 suivant :

**--Tableau 2 --**

| ***Échantillon à tester*** | ***Moyenne*** | ***Écart-type*** | ***Groupe*** |
|---|---|---|---|
| V | 5 | 0 | A |
| 1 | 2,5 | 1,3 | A |
| 2 | 3,1 | 1,4 | A |
| 3 | 3,8 | 1,2 | A |
| 4 | 2,6 | 1,3 | A |
| 5 | 2,8 | 1,6 | A |
| 6 | 4,0 | 1,8 | B |
| 7 (comparatif) | 4,2 | 2,4 | B |
| 8 (comparatif) | 4,5 | 2,0 | B |

Le traitement statistique de ces résultats, réalisé à l'aide du logiciel FIZZ version 2.01 (Biosystèmes, Couternon, France), permet de calculer l'écart-type et de classer les échantillons en deux groupes en étudiant la PPDS (plus petite différence significative) fixée dans ce test à 1,05. Ce test statistique de comparaison de moyennes permet de déterminer d'un point de vue statistique si les moyennes de deux échantillons sont significativement différentes. Dans les exemples ci-dessus, le paramétrage statistique utilisé est fixé à 95%.

Si les moyennes ne sont pas significativement différentes, les deux échantillons sont classés dans un même groupe. Si les moyennes sont significativement différentes, les deux échantillons constituent deux groupes séparés (A et B dans les exemples illustratifs de l'invention).

La même opération est effectuée pour comparer tous les échantillons, ce qui permet *in fine* d'arriver à 1, 2 ou plusieurs groupes, chacun constitué d'échantillons dont les notes moyennes ne sont pas significativement différentes.

Les résultats présentés dans le Tableau 2 ci-dessus montrent qu'il existe une différence statistique significative indiquant une perception de l'odeur nettement plus agréable des échantillons comprenant une composition odorisée selon l'invention, par rapport à la référence (poly(sulfure de phénol) non odorisé), En revanche, un poly(sulfure de phénol) odorisé uniquement avec un terpène (limonène ou β-pinène, hors de l'invention) ne présente pas une odeur suffisamment masquée.

## Revendications

1. Composition comprenant :
a) au moins 50% et de préférence au moins 70%, de préférence encore au moins 80%, de manière tout à fait préférée au moins 90% en poids d'au moins un poly(sulfure de phénol) ; et
b) de quelques ppm, avantageusement de 10 ppm, à 2%, de préférence de 10 ppm à 1% en poids par rapport au poids total de la composition, d'au moins un agent masquant d'odeur comprenant au moins un composé choisi parmi b1) les alcools, b2) les esters, b3) les aldéhydes, b4) les cétones et b5) les éthers ;
ledit agent masquant d'odeur comprenant :
- au moins un alcool b1), au moins un ester b2) et au moins un aldéhyde b3) ou
- au moins un ester b2), au moins une cétone b4) et au moins un éther b5).

2. Composition selon la revendication 1, dans laquelle ledit au moins un poly(sulfure de phénol) répond à la formule (1) suivante : 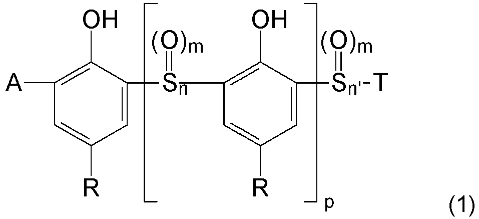 dans laquelle :
• R représente un atome d'hydrogène ou un groupement hydrocarboné, linéaire, ramifié et/ou cyclique, totalement ou partiellement saturé ou insaturé, comportant de 1 à 20 atomes de carbones ;
• n et n', identiques ou différents, représentent indépendamment l'un de l'autre un entier supérieur ou égal à 1, de préférence compris entre 1 et 8, de préférence encore entre 1 et 6, plus préférentiellement compris entre 1 et 4, bornes incluses ;
• p représente un entier compris entre 0 et 100, de préférence compris entre 0 et 50, de préférence encore compris entre 0 et 40 bornes incluses ;
• A représente un atome d'hydrogène, et T représente un radical de formule(2) : 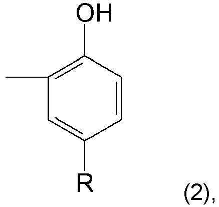 ou bien, uniquement lorsque p est strictement supérieur à 0, A et T peuvent former ensemble une liaison simple, de manière à former un poly(sulfure de phénol) cyclique ; et
• m représente 0, 1 ou 2.

3. Composition selon la revendication 1 ou la revendication 2, formulée avec un ou plusieurs additifs ou charges, de préférence choisis parmi les acides gras, la silice, l'urée et les dérivés d'urée.

4. Composition selon l'une quelconque des revendications précédentes, dans laquelle ledit alcool b1) est choisi parmi les mono-alcools, comprenant de 1 à 40 atomes de carbone, de préférence de 6 à 35 atomes de carbone, de préférence encore de 8 à 30 atomes de carbone, lesdits atomes de carbone formant une chaîne linéaire ou ramifiée comportant éventuellement une ou plusieurs insaturation(s) sous forme de double(s) liaison(s), et comportant éventuellement une structure cyclique à 5 ou 6 chaînons, saturée, ou totalement ou partiellement insaturée.

5. Composition selon l'une quelconque des revendications précédentes, dans laquelle l'alcool b1) est choisi parmi l'alcool benzylique, le phényléthanol, le propyléthanol, le butyléthanol, les 2-méthoxyphénols substitués en position 4 par un radical alkyle ou alcényle, et autres, ainsi que les mélanges de deux ou plusieurs d'entre eux en toutes proportions.

6. Composition selon l'une quelconque des revendications précédentes, dans laquelle le au moins un ester b2) est choisi parmi acétates, propionates, butyrates, méthylbutyrates, pentanoates, hexanoates, heptanoates, benzoates, hydroxybenzoates, cyclopropylcarboxylates, cyclobutylcarboxylates, cyclopentylcarboxylates, cyclohexylcarboxylates, citrates, caproates, oléates, linoléates, linolénates, d'alkyle linéaire ou ramifié, d'alcényle linéaire ou ramifié comportant de 3 à 12 atomes de carbone, d'aryle, de dérivés de terpènes, les lactones, et autres, ainsi que leurs mélanges.

7. Composition selon l'une quelconque des revendications précédentes, dans laquelle les aldéhydes b3) sont choisis parmi le propanal, le butanal, le pentanal, l'hexanal, l'heptanal, l'octanal, le nonanal, le décanal, le undécanal, le docdécanal, le benzaldéhyde, le géranial, le néral, le citronellal, les hydroxydécanals les phénylpropanals, les phénylbutanals, les phénylpentanals, les phénylhexanals, les hydroxybenzaldéhydes, les alkoxybenzaldéhydes, et autres, ainsi que leurs homologues substitués, et les mélanges de deux ou plusieurs de ces aldéhydes, en toutes proportions.

8. Composition selon l'une quelconque des revendications précédentes, dans laquelle les cétones b4) sont choisies parmi la propanone, la butanone, la pentanone, l'hexanone, l'heptanone, l'octanone, la nonanone, la décanone, la undécanone, la dodécanone, la menthone, l'iso-menthone, les ionones, les méthylionones, les phényléthanones, les benzopyranones, le 1,8-cinéole, l'ascaridole, la flavonone, la calone, la galbascone, et autres, ainsi que leurs homologues substitués, et les mélanges de deux ou plusieurs de ces cétones, en toutes proportions.

9. Composition selon l'une quelconque des revendications précédentes, dans laquelle les éthers b5) sont choisis parmi les dialkyléthers éventuellement substitués, les pyranes, les furanes, les benzopyranes, les benzofuranes, les naphtopyranes, les naphtofuranes, et autres, ainsi que leurs homologues substitués, et les mélanges de deux ou plusieurs de ces éthers, en toutes proportions.

10. Composition selon l'une quelconque des revendications précédentes, comprenant en outre, en quantités minoritaires, d'autres agents (fragrances) choisis parmi acides gras, glycols, composés terpéniques, ainsi qu'un ou plusieurs additifs choisis parmi solvants, pigments, colorants, conservateurs, et biocides.

11. Composition selon l'une quelconque des revendications précédentes, dans laquelle l'agent masquant d'odeur comprend :
• au moins 1% en poids, et de préférence au moins 10% en poids, d'au moins un alcool b1), choisi parmi l'alcool benzylique, le phényléthanol, le propyléthanol et le butyléthanol, ainsi que leurs mélanges en toutes proportions,
• au moins 1% en poids, et de préférence au moins 10% en poids, d'au moins un ester b2), choisi parmi l'acétate de benzyle, l'acétate de phényléthyle, le 2-hydroxybenzoate de méthyle, le 2-hydroxybenzoate de benzyle, les butyrolactones, et les hexanolides comportant de 6 à 12 atomes de carbone, ainsi que leurs mélanges en toutes proportions,
• au moins 1% en poids, et de préférence au moins 10% en poids, d'au moins un aldéhyde b3), choisi parmi le 3-(4-éthylphényl)-2,2-diméthylpropanal, le 3-(2-éthylphényl)-2,2-diméthylpropanal, le 7-hydroxydécanal, le 7-hydroxy-3,7-diméthyloctanal, le 2-méthoxybenzaldéhyde, le 4-méthoxybenzaldéhyde, ainsi que leurs mélanges en toutes proportions, et
• le complément à 100% comprenant au moins une cétone b4) et/ou au moins un éther b5) et/ou une ou plusieurs autres fragrances et/ou additifs choisis parmi solvants, pigments, colorants, conservateurs, et biocides.

12. Composition selon l'une quelconque des revendications 1 à 10, dans laquelle l'agent masquant d'odeur comprend :
• au moins 1% en poids, et de préférence au moins 10% en poids, d'au moins un ester b2), choisi parmi les esters cycliques de type alcanolide, tels que définis précédemment,
• au moins 1% en poids, et de préférence au moins 10% en poids, d'au moins une cétone b4), choisie parmi la menthone, l'iso-menthone, les ionones, les méthylionones, les phényléthanones, les benzopyranones, le 1,8-cinéole, l'ascaridole, la flavonone, la calone, la galbascone, et autres, ainsi que leurs homologues substitués, et les mélanges de deux ou plusieurs de ces cétones, en toutes proportions,
• au moins 1% en poids, et de préférence au moins 10% en poids, d'au moins un éther b5), choisi parmi les dialkyléthers éventuellement substitués (par exemples les bis-hydroxypropyléthers), les pyranes, les furanes, les benzopyranes, les benzofuranes, les naphtopyranes, les naphtofuranes, et autres, ainsi que leurs homologues substitués, et les mélanges de deux ou plusieurs de ces éthers, en toutes proportions, et
• le complément à 100% comprenant au moins un alcool b1) et/ou au moins un aldéhyde b3) et/ou une ou plusieurs autres fragrances et/ou additifs choisis parmi solvants, pigments, colorants, conservateurs, et biocides.

13. Utilisation d'au moins un agent masquant d'odeur b) défini dans l'une quelconque des revendications 4 à 12, pour atténuer, ou encore masquer l'odeur d'au moins un poly(sulfure de phénol), ou d'une composition comprenant au moins un poly(sulfure de phénol), notamment un poly(sulfure de phénol) de formule (1) selon la revendication 2.

14. Utilisation d'une composition selon l'une quelconque des revendications 1 à 12, en tant qu'agent antioxydant et/ou stabilisant thermique pour les matières plastiques ou pour les huiles, en tant que retardateur de flamme pour les matières plastiques ou bien encore pour les fibres synthétiques ou végétales, en tant qu'agent de protection du bois, en tant qu'agent de dismutation et blanchiment des résines végétales, en tant qu'agent de contrôle de charge pour toner, et autres.

15. Produit manufacturé préparé avec au moins une composition selon l'une quelconque des revendications 1 à 12.

16. Produit selon la revendication 15, choisis parmi élastomères, pneus ou parties de pneus, les produits à base de résines thermoplastiques, les mélanges-maîtres, les produits à base de colophane, les produits à base de fibres végétales, les produits à base de polystyrène expansé, les composants de toners pour impression, les produits à base de bois traité avec des poly(sulfures de phénol), et autres.

## Patentansprüche

1. Zusammensetzung, umfassend:
a) mindestens 50 % und vorzugsweise mindestens 70 %, noch stärker bevorzugt mindestens 80 %, auf vollkommen bevorzugte Weise mindestens 90 % nach Gewicht an mindestens einem Polyphenolsulfid; und
b) von einigen ppm, vorteilhafterweise von 10 ppm, bis zu 2 %, vorzugsweise von 10 ppm bis 1 Gewichts-%, bezogen auf das Gesamtgewicht der Zusammensetzung, an mindestens einem geruchsmaskierenden Mittel umfasst, das mindestens eine Verbindung umfasst, welche aus b1) Alkoholen, b2) Estern, b3) Aldehyden, b4) Ketonen und b5) Ethern ausgewählt ist;
wobei das geruchsmaskierende Mittel Folgendes umfasst:
- mindestens einen Alkohol b1), mindestens einen Ester b2) und mindestens ein Aldehyd b3) oder
- mindestens einen Ester b2), mindestens ein Keton b4) und mindestens einen Ester b5).

2. Zusammensetzung nach Anspruch 1, wobei das mindestens eine Polyphenolsulfid der folgenden Formel (1) entspricht: 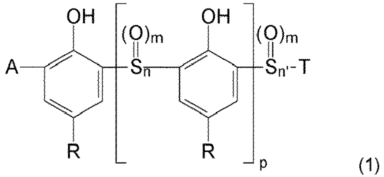 in welcher:
• R für ein Wasserstoffatom oder eine geradkettige, verzweigte und/oder zyklische Kohlenwasserstoffgruppe steht, die vollständig oder teilweise gesättigt oder aber ungesättigt ist, wobei sie 1 bis 20 Kohlenstoffatome aufweist;
• n und n', die vollkommen gleichartig oder verschiedenartig sind, unabhängig voneinander für eine ganze Zahl größer oder gleich 1 stehen, wobei diese vorzugsweise im Bereich von 1 bis 8, auf wiederum bevorzugte Weise von 1 bis 6, stärker bevorzugt von 1 bis 4 einschließlich der Grenzwerte liegt;
• p für eine ganze Zahl im Bereich von 0 bis 100, vorzugsweise im Bereich von 0 bis 50, auf wiederum bevorzugte Weise im Bereich von 0 bis 40 einschließlich der Grenzwerte steht;
• A für ein Wasserstoffatom steht und T für einen Rest der folgenden Formel (2) steht: 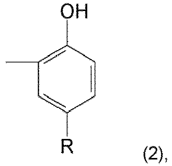 oder aber, wenn p streng größer als 0 ist, A und T gemeinsam eine Einfachbindung bilden können, sodass ein zyklisches Polyphenolsulfid entsteht; und
• m für 0, 1 oder 2 steht.

3. Zusammensetzung nach Anspruch 1 oder Anspruch 2, wobei sie mit einem oder mehreren Zusatzstoffen oder Füllstoffen formuliert ist, die vorzugsweise aus Fettsäuren, Siliciumdioxid, Harnstoff und Harnstoffderivaten ausgewählt sind.

4. Zusammensetzung nach einem beliebigen der vorhergehenden Ansprüche, wobei der Alkohol b1) aus den Monoalkoholen ausgewählt ist, die 1 bis 40 Kohlenstoffatome, vorzugsweise 6 bis 35 Kohlenstoffatome, auf wiederum bevorzugte Weise 8 bis 30 Kohlenstoffatome umfassen, wobei die Kohlenstoffatome eine unverzweigte oder verzweigte Kette bilden, die möglicherweise eine oder mehrere ungesättigte Stelle(n) in Form von Doppelbindungen aufweist, und möglicherweise eine 5- bis 6-gliedrige zyklische Struktur aufweisen, die gesättigt oder aber vollständig oder teilweise ungesättigt ist.

5. Zusammensetzung nach einem beliebigen der vorhergehenden Ansprüche, wobei der Alkohol b1) aus Benzylalkohol, Phenylethanol, Propylethanol, Butylethanol, den Methoxyphenolen, welche an der Position 4 mit einem Alkyl- oder Alkenylrest substituiert sind, und sonstigen sowie aus den Mischungen von zweien oder mehreren davon in jedweden Anteilen ausgewählt ist.

6. Zusammensetzung nach einem beliebigen der vorhergehenden Ansprüche, wobei der mindestens eine Ester b2) aus den Acetaten, Propionaten, Butyraten, Methylbutyraten, Pentanoaten, Hexanoaten, Heptanoaten, Benzoaten, Hydroxybenzoaten, Cyclopropylcarboxylaten, Cyclobutylcarboxylaten, Cyclopentylcarboxylaten, Cyclohexylcarboxylaten, Citraten, Caproaten, Oleaten, Linoleaten, Linolenaten von geradkettigem oder verzweigtem Alkyl, von geradkettigem oder verzweigtem Alkenyl mit 3 bis 12 Kohlenstoffatomen, von Aryl, von Terpenderivaten, aus den Lactonen und sonstigen sowie aus deren Mischungen ausgewählt ist.

7. Zusammensetzung nach einem beliebigen der vorhergehenden Ansprüche, wobei die Aldehyde b3) aus Propanal, Butanal, Pentanal, Hexanal, Heptanal, Octanal, Nonanal, Decanal, Undecanal, Dodecanal, Benzaldehyd, Geranial, Neral, Citronellal, Hydroxydecanalen, Phenylpropanalen, Phenylbutanalen, Phenylpentanalen, Phenylhexanalen, Hydroxybenzaldehyden, Alkoxybenzaldehyden und sonstigen sowie deren substituierten Homologa und aus den Mischungen von zweien oder mehreren dieser Aldehyde in jedweden Anteilen ausgewählt sind.

8. Zusammensetzung nach einem beliebigen der vorhergehenden Ansprüche, wobei die Ketone b4) aus Propanon, Butanon, Pentanon, Hexanon, Heptanon, Octanon, Nonanon, Decanon, Undecanon, Dodecanon, Menthon, Isomenthon, Iononen, Methyliononen, Phenylethanonen, Benzopyranonen, 1,8-Cineol, Ascaridol, Flavonon, Calon, Galbascon und sonstigen sowie deren substituierten Homologa und aus den Mischungen von zweien oder mehreren dieser Ketone in jedweden Anteilen ausgewählt sind.

9. Zusammensetzung nach einem beliebigen der vorhergehenden Ansprüche, wobei die Ether b5) aus den möglicherweise substituierten Dialkylethern, den Pyranen, Furanen, Benzopyranen, Benzofuranen, Naphthopyranen, Naphthofuranen und sonstigen sowie deren substituierten Homologa und aus den Mischungen von zweien oder mehreren dieser Ether in jedweden Anteilen ausgewählt sind.

10. Zusammensetzung nach einem beliebigen der vorhergehenden Ansprüche, die darüber hinaus, in geringfügigen Anteilen, weitere Mittel (Duftstoffe), welche aus den Fettsäuren, Glykolen, Terpenverbindungen ausgewählt sind, sowie einen oder mehreren Zusatzstoffe umfasst, welche aus den Lösungsmitteln, Pigmenten, Farbstoffen, Konservierungsstoffen und Bioziden ausgewählt sind.

11. Zusammensetzung nach einem beliebigen der vorhergehenden Ansprüche, wobei das geruchsmaskierende Mittel Folgendes umfasst:
• mindestens 1 Gewichts-%, und vorzugsweise mindestens 10 Gewichts-%, an mindestens einem Alkohol b1), der aus Benzylalkohol, Phenylalkohol, Propylalkohol und Butylalkohol sowie deren Mischungen in jedweden Anteilen ausgewählt ist,
• mindestens 1 Gewichts-%, und vorzugsweise mindestens 10 Gewichts-%, an mindestens einem Ester b2), der aus Benzylacetat, Phenylethylacetat, Methyl-2-hydroxybenzoat, Benzyl-2-hydroxybenzoat, Butyrolactonen und den Hexanoliden, welche 6 bis 12 Kohlenstoffatome aufweisen, sowie deren Mischungen in jedweden Anteilen ausgewählt ist,
• mindestens 1 Gewichts-%, und vorzugsweise mindestens 10 Gewichts-%, mindestens eines Aldehyds b3), das aus 3-(4-Ethylphenyl)-2,2-dimethylpropanal, 3-(2-Ethylphenyl)-2,2-dimethylpropanal, 7-Hydroxydecanal, 7-Hydroxy-3,7-dimethyloctanal, 2-Methoxybenzaldehyd, 4-Methoxybenzaldehyd sowie deren Mischungen in jedweden Anteilen ausgewählt ist, und
• wobei der zu 100 % fehlende Anteil mindestens ein Keton b4) und/oder mindestens einen Ether b5) und/oder einen oder mehrere weitere Duftstoffe und/oder Zusatzstoffe umfasst, welche aus den Lösungsmitteln, Pigmenten, Farbstoffen, Konservierungsstoffen und Bioziden ausgewählt sind.

12. Zusammensetzung nach einem beliebigen der Ansprüche 1 bis 10, wobei das geruchsmaskierende Mittel Folgendes umfasst:
• mindestens 1 Gewichts-%, und vorzugsweise mindestens 10 Gewichts-%, an mindestens einem Ester b2), der aus den zyklischen Estern vom Alcanolid-Typ gemäß der vorstehenden Begriffsbestimmung ausgewählt ist,
• mindestens 1 Gewichts-%, und vorzugsweise mindestens 10 Gewichts-%, an mindestens einem Keton b4), das aus Menthon, Isomenthon, den Iononen, Methyliononen, Phenylethanonen, Benzopyranonen, 1,8-Cineol, Ascaridol, Flavonon, Calon, Galbascon und sonstigen sowie deren substituierten Homologa und aus den Mischungen von zweien oder mehreren dieser Ketone in jedweden Anteilen ausgewählt ist,
• mindestens 1 Gewichts-%, und vorzugsweise mindestens 10 Gewichts-%, mindestens eines Ethers b5), der aus den möglicherweise substituierten Dialkylethern (beispielsweise den bis-(Hydroxypropyl)ethern), den Pyranen, Furanen, Benzopyranen, Benzofuranen, Naphthopyranen, Naphthofuranen und sonstigen sowie deren substituierten Homologa und aus den Mischungen von zweien oder mehreren dieser Ether in jedweden Anteilen ausgewählt ist, und
• wobei der zu 100 % fehlende Anteil mindestens einen Alkohol b1) und/oder mindestens ein Aldehyd b3) und/oder einen oder mehrere weitere Duftstoffe und/oder Zusatzstoffe umfasst, welche aus den Lösungsmitteln, Pigmenten, Farbstoffen, Konservierungsstoffen und Bioziden ausgewählt sind.

13. Verwendung mindestens eines geruchsmaskierenden Mittels b) gemäß der Begriffsbestimmung in einem beliebigen der Ansprüche 4 bis 12, um den Geruch mindestens eines Polyphenolsulfids oder einer Zusammensetzung, die mindestens ein Polyphenolsulfid, insbesondere ein Polyphenolsulfid nach Formel (1) gemäß Anspruch 2 umfasst, abzuschwächen oder auch zu maskieren.

14. Verwendung einer Zusammensetzung nach einem beliebigen der Ansprüche 1 bis 12 als Antioxidans und/oder Hitzestabilisator für Kunststoffe oder für Öle, als Flammschutzmittel für Kunststoffe oder auch für Kunst- oder Pflanzenfasern, als Holzschutzmittel, als Mittel zum Disproportionieren und Bleichen von pflanzlichen Harzen, als Ladungsprüfmittel für Toner, und Sonstiges.

15. Fertigartikel, der mit mindestens einer Zusammensetzung nach einem beliebigen der Ansprüche 1 bis 12 hergestellt wurde.

16. Artikel nach Anspruch 15, der aus den Elastomeren, Luftreifen oder Teilen von Luftreifen, den Artikeln auf Basis von thermoplastischen Harzen, den Masterbatch-Granulaten, den Artikeln auf Basis von Kolophonium, den Artikeln auf Basis von Pflanzenfasern, den Artikeln auf Basis von expandiertem Polystyrol, den Bestandteilen von Tonern für Druckzwecke, den Artikeln auf Basis von Holz, welche mit Polyphenolsulfiden behandelt wurde, und sonstigem ausgewählt ist.

## Claims

1. Composition comprising:
a) at least 50% and preferably at least 70%, more preferably at least 80%, especially preferably at least 90%, by weight of at least one poly (phenol sulfide); and
b) a few ppm, advantageously 10 ppm at 2% by weight, preferably 10 ppm at 1% by weight, relative to the total weight of the composition, of at least one odour-masking agent comprising at least one compound selected from b1) alcohols, b2) esters, b3) aldehydes, b4) ketones and b5) ethers;
said odour-masking agent comprising:
- at least one alcohol b1), at least one ester b2) and at least one aldehyde b3) or
- at least one ester b2), at least one ketone b4) and at least one ether b5).

2. Composition according to Claim 1, wherein said at least one poly(phenol sulfide) corresponds to the following formula (1): 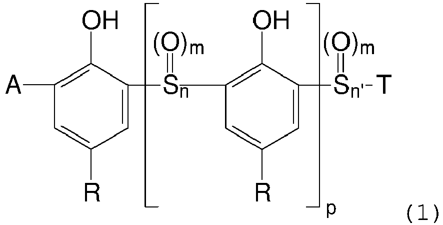 where:
• R is a hydrogen atom or a linear, branched and/or cyclic, fully or partially saturated or unsaturated hydrocarbon-containing group containing from 1 to 20 carbon atoms;
• n and n', which may be identical or different, are each independently an integer greater than or equal to 1, preferably between 1 and 8, more preferably between 1 and 6, even more preferably between 1 and 4, inclusive;
• p is an integer between 0 and 100, preferably between 0 and 50, more preferably between 0 and 40, inclusive;
• A is a hydrogen atom and T is a radical of formula (2) : 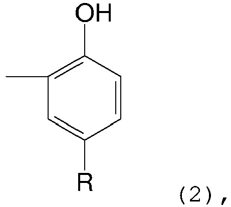 or else, only when p is strictly greater than 0, A and T together may form a single bond, so as to form a cyclic poly(phenol sulfide); and
• m is 0, 1 or 2.

3. Composition according to Claim 1 or Claim 2, formulated with one or more additives or fillers, preferably selected from fatty acids, silica, urea and urea derivatives.

4. Composition according to any one of the preceding claims, wherein said alcohol b1) is selected from monohydric alcohols comprising from 1 to 40 carbon atoms, preferably from 6 to 35 carbon atoms, more preferably from 8 to 30 carbon atoms, said carbon atoms forming a linear or branched chain optionally containing one or more unsaturation(s) in the form of double bond(s) and optionally containing a cyclic structure with 5 or 6 atoms in the ring, which may be saturated or fully or partially unsaturated.

5. Composition according to any one of the preceding claims, wherein the alcohol b1) is selected from benzyl alcohol, phenylethanol, propylethanol, butylethanol, 2-methoxyphenols substituted in the 4-position with an alkyl or alkenyl radical, and other alcohols, and also mixtures of two or more thereof in any proportion.

6. Composition according to any one of the preceding claims, wherein the at least one ester b2) is selected from acetates, propionates, butyrates, methylbutyrates, pentanoates, hexanoates, heptanoates, benzoates, hydroxybenzoates, cyclopropylcarboxylates, cyclobutylcarboxylates, cyclopentylcarboxylates, cyclohexylcarboxylates, citrates, caproates, oleates, linoleates or linolenates of linear or branched alkyl, of linear or branched alkenyl containing from 3 to 12 carbon atoms, of aryl, of terpene derivatives, lactones and other esters, and mixtures thereof.

7. Composition according to any one of the preceding claims, wherein the aldehydes b3) are selected from propanal, butanal, pentanal, hexanal, heptanal, octanal, nonanal, decanal, undecanal, dodecanal, benzaldehyde, geranial, neral, citronellal, hydroxydecanals, phenylpropanals, phenylbutanals, phenylpentanals, phenylhexanals, hydroxybenzaldehydes, alkoxybenzaldehydes and other aldehydes, and also the substituted homologues thereof, and mixtures of two or more of these aldehydes in any proportion.

8. Composition according to any one of the preceding claims, wherein the ketones b4) are selected from propanone, butanone, pentanone, hexanone, heptanone, octanone, nonanone, decanone, undecanone, dodecanone, menthone, isomenthone, ionones, methylionones, phenylethanones, benzopyranones, 1,8-cineole, ascaridole, flavonone, calone, galbascone and other ketones, and also the substituted homologues thereof, and mixtures of two or more of these ketones in any proportion.

9. Composition according to any one of the preceding claims, wherein the ethers b5) are selected from dialkyl ethers, which may be optionally substituted, pyrans, furans, benzopyrans, benzofurans, naphthopyrans, naphthofurans and other ethers, and also the substituted homologues thereof, and mixtures of two or more of these ethers in any proportion.

10. Composition according to any one of the preceding claims, further comprising minor amounts of other agents (fragrances) selected from fatty acids, glycols, terpene compounds, and also one or more additives selected from solvents, pigments, dyes, preservatives and biocides.

11. Composition according to any one of the preceding claims, wherein the odour-masking agent comprises:
• at least 1% by weight and preferably at least 10% by weight, of at least one alcohol b1) selected from benzyl alcohol, phenylethanol, propylethanol and butylethanol, and mixtures thereof in any proportion,
• at least 1% by weight and preferably at least 10% by weight, of at least one ester b2) selected from benzyl acetate, phenylethyl acetate, methyl 2-hydroxybenzoate, benzyl 2-hydroxybenzoate, butyrolactones and hexanolides containing from 6 to 12 carbon atoms, and mixtures thereof in any proportion,
• at least 1% by weight and preferably at least 10% by weight, of at least one aldehyde b3) selected from 3-(4-ethylphenyl)-2,2-dimethylpropanal, 3-(2-ethylphenyl)-2,2-dimethylpropanal, 7-hydroxydecanal, 7-hydroxy-3,7-dimethyloctanal, 2-methoxybenzaldehyde, 4-methoxybenzaldehyde, and mixtures thereof in any proportion, and
• this is made up to 100% with at least one ketone b4) and/or at least one ether b5) and/or one or more other fragrances and/or additives selected from solvents, pigments, dyes, preservatives and biocides.

12. Composition according to any one of Claims 1 to 10, wherein the odour-masking agent comprises:
• at least 1% by weight and preferably at least 10% by weight, of at least one ester b2) selected from the cyclic esters of the alkanolide type, as defined above,
• at least 1% by weight and preferably at least 10% by weight, of at least one ketone b4) selected from menthone, isomenthone, ionones, methylionones, phenylethanones, benzopyranones, 1,8-cineole, ascaridole, flavonone, calone, galbascone and other ketones, and also the substituted homologues thereof, and mixtures of two or more of these ketones in any proportion,
• at least 1% by weight and preferably at least 10% by weight, of at least one ether b5) selected from the optionally substituted dialkyl ethers (for examples bis-hydroxypropyl ethers), pyrans, furans, benzopyrans, benzofurans, naphthopyrans, naphthofurans and other ethers, and also the substituted homologues thereof, and mixtures of two or more of these ethers in any proportion, and
• this is made up to 100% with at least one alcohol b1) and/or at least one aldehyde b3) and/or one or more other fragrances and/or additives selected from solvents, pigments, dyes, preservatives and biocides.

13. Use of at least one odour-masking agent b) defined in any one of Claims 4 to 12, for lessening or else masking the odour of at least one poly(phenol sulfide), or of a composition comprising at least one poly(phenol sulfide), especially a poly(phenol sulfide) of formula (1) according to Claim 2.

14. Use of a composition according to any one of Claims 1 to 12 as an antioxidant and/or thermal stabilizer for plastics or for oils, as a flame retardant for plastics or else for synthetic or vegetable fibres, as a protective agent for wood, as an agent for dismutation and bleaching of vegetable resins, as a charge control agent for toners, and other such uses.

15. Manufactured product produced using at least one composition according to any one of Claims 1 to 12.

16. Product according to Claim 15, selected from elastomers, tyres or parts of tyres, products based on thermoplastic resins, masterbatches, products based on rosin, products based on vegetable fibres, products based on polystyrene foam, the components of toners for printing, products based on wood treated with poly(phenol sulfides), and other such products.
